# EUROPÄISCHE PATENTANMELDUNG

(11) **EP 4 105 251 A1**
(43) Veröffentlichungstag der Anmeldung: **21.12.2022**
(21) Anmeldenummer: 21180291.3
(22) Anmeldetag: 18.06.2021
(51) Int. Cl.: C08G 12/12, C09D 161/24

(54) **VERNETZBARE ZUSAMMENSETZUNGEN, ENTHALTEND IMIN- UND/ODER AMINAL-BILDENDE KOMPONENTEN**

(71) Anmelder: Covestro Deutschland AG, 51373 Leverkusen (DE)
(72) Erfinder: KNOSPE, Philipp, 46459 Rees (DE); DORNBUSCH, Michael, 40591 Düsseldorf (DE)
(74) Vertreter: Levpat

(57) **Zusammenfassung**

Die Erfindung betrifft vernetzbare Zusammensetzungen, enthaltend Imin- und/oder Aminal-bildende Komponenten, vernetzte Zusammensetzungen, erhältlich aus den vernetzbaren Zusammensetzungen, Beschichtungsmittel, Kleb- und Dichtstoffe, umfassend die vernetzbaren Zusammensetzungen, Beschichtungen, Klebungen und Dichtungen, umfassend die vernetzten Zusammensetzungen, sowie mindestens ein Substrat und eine vernetzbare Zusammensetzung bzw. eine vernetzte Zusammensetzung umfassende Gegenstände.

## Beschreibung

Die Erfindung betrifft vernetzbare Zusammensetzungen, enthaltend Imin- und/oder Aminal-bildende Komponenten, vernetzte Zusammensetzungen, erhältlich aus den vernetzbaren Zusammensetzungen, Beschichtungsmittel, Kleb- und Dichtstoffe, umfassend die vernetzbaren Zusammensetzungen, Beschichtungen, Klebungen und Dichtungen, umfassend die vernetzten Zusammensetzungen, sowie mindestens ein Substrat und eine vernetzbare Zusammensetzung bzw. eine vernetzte Zusammensetzung umfassende Gegenstände.

Die Vernetzung von Aldehyden mit Amingruppen-aufweisenden Verbindungen ist Literatur-bekannt. So beschreibt EP 2 883 894 A1 vernetzbare Zusammensetzungen auf Basis von Polyolen, Polyaldehyden und Polycarbamaten.

Aufgabe der vorliegenden Erfindung war die Bereitstellung von neuen vernetzbaren Zusammensetzungen, die zu hochwertigen Beschichtungen führen, welche eine gute Haftung auf Substraten und eine hohe Härte aufweisen. Diese Aufgabe wurde durch die nachfolgend beschriebenen Zusammensetzungen gelöst.

Gegenstand der vorliegenden Erfindung sind vernetzbare Zusammensetzungen Z1, enthaltend oder bestehend aus
A) mindestens eine/r Polyadditionsverbindung, welche mindestens ein Strukturelement der allgemeinen Formel I 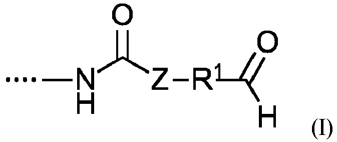 aufweist, wobei
   - R¹: ein gesättigter oder ungesättigter, linearer oder verzweigter aliphatischer, ein gegebenenfalls substituierter aromatischer, heterocyclischer, cycloaliphatischer oder araliphatischer Rest mit bis zu 18 Kohlenstoffatomen ist, der bis zu drei Heteroatome aus der Reihe Sauerstoff, Schwefel oder Stickstoff enthalten kann,
   und
   - Z: für O, S oder N(H) steht, bevorzugt für O steht,
B) mindestens ein/einem Harnstoffderivat der allgemeinen Formel II 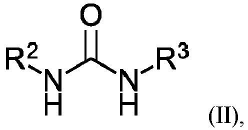 wobei
   - R²: für Wasserstoff, einen Methyl- oder Ethylrest steht, und
   - R³: für Wasserstoff, einen Methyl- oder Ethylrest oder für den Rest 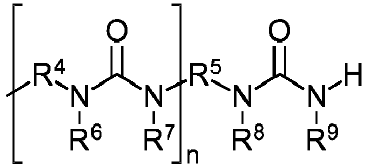 steht, wobei
   n für eine ganze Zahl ≥ 0, bevorzugt für 0 bis 5, besonders bevorzugt für 0 steht,
   R⁴ und R⁵ unabhängig voneinander für einen linearen oder verzweigten aliphatischen Rest mit bis zu 5 Kohlenstoffen stehen, bevorzugt für Methylen- und Ethylen-Reste stehen,
   R⁶ bis R⁹ unabhängig voneinander für Wasserstoff, einen Methyl- oder Ethylrest stehen,
   und bevorzugt R² für Wasserstoff und R³ für Wasserstoff, einen Methylrest oder den Rest gemäß obiger Abbildung steht, in dem R⁹ Wasserstoff oder ein Methylrest ist, oder R² und R³ jeweils für einen Methylrest steht, besonders bevorzugt R² für Wasserstoff und R³ für Wasserstoff oder einen Methylrest steht und am meisten bevorzugt R² und R³ für Wasserstoff stehen,
C) gegebenenfalls Hilfs- und/oder Zusatzstoffe/n.

Ebenfalls Gegenstand der vorliegenden Erfindung sind vernetzbare Zusammensetzungen Z1 wie zuvor beschrieben, wobei die mindestens eine Polyadditionsverbindung A erhältlich ist aus einer Zusammensetzung, enthaltend oder bestehend aus
A1) mindestens ein/einem Aldehyd der allgemeinen Formel III 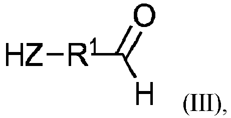 wobei Z und R1 die oben genannte Bedeutung haben,
A2) eine/r Isocyanatkomponente,
   und
A3) gegebenenfalls mindestens ein/einem Hydrophilierungsmittel.

Weitere Gegenstände der vorliegenden Erfindung sind
Polyadditionsverbindungen A, die mindestens ein Strukturelement der allgemeinen Formel I 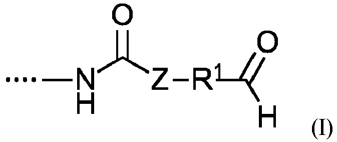 aufweisen, wobei Z und R1 die oben genannte Bedeutung haben,
sowie ein Verfahren zur Herstellung der erfindungsgemäßen Polyadditionsverbindungen A, umfassend die oder bestehend aus der Umsetzung der Komponenten A1, A2 und gegebenenfalls A3.

### Polyadditionsverbindung A

In einer bevorzugten Ausführungsform steht R1 in Formel I bzw. III für den Rest 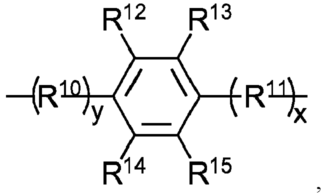 wobei
R¹⁰ und R¹¹ unabhängig voneinander für einen linearen oder verzweigten aliphatischen Rest mit bis zu 6 Kohlenstoffatomen, bevorzugt einen Methylen- oder Ethylenrest stehen,
X und Y unabhängig voneinander für 0 oder 1 und bevorzugt beide für 0 stehen, und
R¹² bis R¹⁵ unabhängig voneinander für Wasserstoff oder einen linearen oder verzweigten aliphatischen Rest mit bis zu 6 Kohlenstoffatomen, bevorzugt einen linearen aliphatischen Rest mit 2 Kohlenstoffatomen stehen, der Heteroatome, wie Sauerstoff, Schwefel oder Stickstoff, bevorzugt Sauerstoff, enthalten kann. Bevorzugt stehen bis zu 2 der Reste R¹² bis R¹⁵ für eine Alkoxygruppe mit bis zu 2 Kohlenstoffatomen und die übrigen dieser vier Reste für Wasserstoff.

Beispielsweise können bei der Herstellung der Polyadditionsverbindung A Vanilin (4-Hydroxy-3-methoxybenzaldehyd), Hydroxybenzaldehyd oder Hydroxymethylfurfural als Aldehyde A1 eingesetzt werden. Ein bevorzugt einzusetzendes Aldehyd A1 der allgemeinen Formel III ist Vanilin (4-Hydroxy-3 -methoxybenzaldehyd).

Die Isocyanatkomponente A2 umfasst wenigstens ein Diisocyanat und/oder wenigstens ein Polyisocyanat. Als "Diisocyanat" wird im Rahmen der vorliegenden Erfindung eine organische Verbindung bezeichnet, die zwei Isocyanatgruppen enthält. Als "Polyisocyanat" wird eine organische Verbindung bezeichnet, die zwei oder mehr Isocyanatgruppen enthält. Diisocyanate sind daher eine Untergruppe von Polyisocyanaten.

Geeignet Isocyanate zur Herstellung der Polyadditionsverbindung A sind beispielsweise monomere Isocyanate. Dazu gehören beliebige monomere Diisocyanate, welche über Phosgenierung in der Flüssig- oder Gasphase oder auf phosgenfreiem Wege zugänglich sind. Bevorzugte Diisocyanate sind solche des Molekulargewichtsbereichs 140 bis 400 g/mol mit aliphatisch, cycloaliphatisch, araliphatisch und/oder aromatisch gebundenen Isocyanatgruppen, wie z. B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (Xylylendiisocyanat, XDI), 1,3- und 1,4-Bis-(2-isocyanato-prop-2-yl)-benzol (Tetramethylxylylendiisocyanat, TMXDI), 2,4- und 2,6-Diisocyanatotoluol (Toluylendiisocyanat, TDI), 2,4'- und 4,4'-Diisocyanatodiphenylmethan (MDI), 1,5-Diisocyanatonaphthalin oder Mischungen aus mindestens zwei solcher Diisocyanate.

Weitere geeignete Isocyanate zur Herstellung der Polyadditionsverbindung A sind aliphatische, cycloaliphatische, araliphatische und aromatische Di- und Polyisocyanate mit Uretdion-, Isocyanurat-, Allophanat-, Harnstoff-, Biuret-, Iminooxadiazindion- und/oder Oxadiazintrionstrukturen. Diese können aus monomeren Di- und Polyisocyanaten der oben beschriebenen Art erhalten werden. Ihre Synthese ist beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 sowie in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 und JP 56059828 beispielhaft beschrieben sind.

Bei der Herstellung dieser Di- und Polyisocyanate schließt sich an die eigentliche Modifizierungsreaktion mit Uretdion-, Isocyanurat-, Allophanat-, Harnstoff-, Biuret-, Iminooxadiazindion- und/oder Oxadiazintrionstrukturen in der Regel ein weiterer Verfahrenschritt zur Abtrennung der nicht umgesetzten überschüssigen monomeren Isocyanate an. Diese Monomerenabtrennung erfolgt nach an sich bekannten Verfahren vorzugsweise durch Dünnschichtdestillation im Hochvakuum oder durch Extraktion mit geeigneten gegenüber Isocyanatgruppen inerten Lösemitteln, beispielsweise aliphatischen oder cycloaliphatischen Kohlenwasserstoffen wie Pentan, Hexan, Heptan, Cyclopentan oder Cyclohexan.

Bevorzugt kommen bei der Herstellung der erfindungsgemäßen Polyadditionsverbindungen A Di- und Polyisocyanate mit Uretdion-, Isocyanurat-, Allophanat-, Harnstoff-, Biuret-, Iminooxadiazindion- und/oder Oxadiazintrionstrukturen der genannten Art zum Einsatz, die einen Gehalt an monomeren Diisocyanaten von weniger als 1 Gew.-%, vorzugsweise weniger als 0,5 Gew.-%, besonders bevorzugt von weniger als 0,3 Gew.-% aufweisen. Die Rest-Monomeren Gehalte werden nach DIN EN ISO 10283:2007-11 gaschromatographisch mit internem Standard gemessen.

Besonders bevorzugt als Isocyanatkomponente A2 für das erfindungsgemäße Verfahren sind Di- und Polyisocyanate mit Uretdion-, Isocyanurat-, Allophanat-, Harnstoff-, Biuret-, Iminooxadiazindion- und/oder Oxadiazintrionstrukturen der genannten Art mit ausschließlich aliphatisch und/oder cycloaliphatisch gebundenen Isocyanatgruppen.

Ganz besonders bevorzugt als Isocyanatkomponente A2 sind Di- und Polyisocyanate mit Isocyanurat- und/oder Allophanatstruktur, die ausschließlich aliphatisch und/oder cycloaliphatisch gebundene Isocyanatgruppen aufweisen, am meisten bevorzugt solche auf Basis von PDI, HDI, IPDI und/oder 4,4'-Diisocyanatodicyclohexylmethan.

Die Polyadditionsverbindung A kann mittels Komponente A3 hydrophiliert werden. Die Hydrophilierung kann mittels nichtionischer bzw. potentiell ionischer und/oder ionischer Gruppen erfolgen. Zur Hydrophilierung werden Verbindungen eingesetzt, die neben den genannten hydrophilierend wirkenden Gruppen isocyanatreaktive Gruppen aufweisen, bevorzugt Hydroxyl- und Aminogruppen, über die diese Verbindungen in die zu hydrophilierende Polyadditionsverbindung A eingebaut werden. Die Hydrophilierung kann erfolgen, indem zunächst ein Teil der Isocyanatgruppen wenigstens eines Isocyanats der Isocyanatkomponente A2 durch Umsetzung mit dem/den Hydrophilierungsmittel/n A3 hydrophiliert wird und dann die Aldehydkomponente A1 mit dem/den hydrophiliertem/en Isocyanat/en umgesetzt wird. Alternativ kann auch Komponente A3 mit nicht umgesetzten Isocyanatgruppen eines Reaktionsproduktes aus A1 und A2 umgesetzt werden.

Nichtionisch hydrophilierende Verbindungen sind beispielsweise einwertige, im statistischen Mittel 5 bis 70, bevorzugt 5 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; Diethylenglykol-monoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole, sowie Diethylenglykol-monoalkylether.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bevorzugt handelt es sich bei den Polyalkylenoxidpolyetheralkoholen um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen.

Besonders bevorzugte Polyalkylenoxidpolyetheralkohole sind solche, die unter Verwendung der oben genannten Monoalkohole des Molekulargewichtsbereiches 32 bis 150 als Startermoleküle hergestellt wurden. Ganz besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher nichtionischer hydrophilierender Verbindungen ist prinzipiell bekannt und beispielsweise in EP-B 0 206 059 und EP-B 0 540 985 beschrieben.

Unter ionisch bzw. potentiell ionisch hydrophilierenden Verbindungen werden Verbindungen verstanden, die mindestens eine isocyanatreaktive Gruppe sowie mindestens eine Funktionalität, wie z.B. -COOY, -SO₃Y, -PO(OY)₂ (Y = H, NH₄⁺, Metallkation), -NR₂, -NR₃⁺ (R = H, Alkyl, Aryl), aufweisen, die bei Wechselwirkung mit wässrigen Medien ein ggf. pH-Wert-abhängiges Dissoziationsgleichgewicht eingeht und auf diese Weise negativ, positiv oder neutral geladen sein kann.

Bevorzugt sind diese Verbindungen mono- oder dihydroxyfunktionelle Carbon-, Sulfon- oder Phosphonsäuren, mono- oder diaminofunktionelle Carbon-, Sulfon- oder Phosphonsäuren, die in Form innerer Salze (Zwitterionen, Betaine, Ylide) oder als Metall- oder Ammoniumsalze vorliegen können. Beispiele für die genannten ionisch bzw. potentiell ionisch hydrophilierenden Verbindungen sind Dimethylolpropionsäure, Hydroxypivalinsäure, N-(2-Aminoethyl)-□ □-alanin, 2-(2-Amino-ethylamino)-ethansulfonsäure, Ethylendiamin-propyl- oder butylsulfonsäure, 1,2- oder 1,3-Propylendiamin-□-ethylsulfonsäure, Lysin, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4, Polyethersulfonat, das propoxylierte Addukt aus 2-Butendiol und NaHSO₃ (z.B. in der DE-A 2 446 440, Seite 5-9, Formel I-III) sowie Verbindungen, die in kationische Gruppen überführbare, z.B. amin-basierende, Bausteine wie N-Methyl-diethanolamin als hydrophile Aufbaukomponenten enthalten. Weiterhin kann auch CAPS (Cyclohexylaminopropansulfonsäure) wie z.B. in der WO 01/88006 verwendet werden.

Besonders bevorzugte ionisch bzw. potentiell ionisch hydrophilerende Verbindungen sind N-(2-Aminoethyl)-□ □-alanin, 2-(2-Amino-ethylamino)-ethansulfonsäure, Dimethylolpropionsäure, des Hydrophilierungsmittels gemäß Beispiel 1 der EP-A 0 916 647, sowie deren Metall- oder Ammoniumsalze.

Die Herstellung der erfindungsgemäßen Polyadditionsverbindungen A erfolgt in einem Verhältnis der NCO-Gruppen der Komponente A2 zu den NCO-reaktiven Gruppen der Komponente A1 und gegebenenfalls A3 von 0,9 bis 1,1, bevorzugt von 1:1. Das Verhältnis der NCO-Gruppen der Komponente A1 zu den NCO-reaktiven Gruppen der Komponente A3 beträgt dabei 3:0 bis 0:3, bevorzugt 2:1 bis 1:2, besonders bevorzugt 2:1.

Die Umsetzung der NCO-Gruppen und NCO-reaktiven Gruppen erfolgt jeweils bei Temperaturen von 20 bis 120 °C, vorzugsweise bei 20 bis 100 °C, besonders bevorzugt bei 20 bis 85 °C. Dies gilt für die Reaktion von A1 mit A2, für die sich gegebenenfalls anschließende Reaktion mit A3 und ebenso für die Reaktion von A1 mit einem Reaktionsprodukt aus A2 mit A3.

Die Umsetzung erfolgt bevorzugt bis zu einem NCO-Gehalt der Polyadditionsverbindung A von ≤ 0,1 Gew.-%. Die Bestimmung des NCO-Gehaltes wird mittels FT-IR Spektroskopie an einem Lumos FTIR Mikroskop der Firma Bruker. Zur Bestimmung des überschüssigen NCO-Gehaltes wird die Isocyanat- Valenzschwingung zwischen 2300 und 2250 cm⁻¹ herangezogen.

Die Polyadditionsverbindungen A können lösemittelfrei, aber auch in Gegenwart von Lösemitteln hergestellt werden. Geeignete Lösemittel sind solche, die sich gegenüber den reaktiven Gruppen der Ausgangskomponenten inert zeigen. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Dimethylsulfoxid, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel. Das Lösemittel kann dabei einem oder mehreren der Reaktionspartner zugegeben werden.

Die Herstellung der erfindungsgemäßen Polyadditionsverbindungen A kann unter Einsatz von Katalysatoren stattfinden. Geeignete Katalysatoren sind Metallsalze und -chelate, Salze von Übergangsmetallen oder Halbmetallen, Säuren oder Basen. Als Säuren können vorzugsweise aromatische Sulfonsäuren, wie Dodecylbenzolsulfonsäure, para-Toluolsulfonsäure, Trifluormethan-sulfonsäure und Dinonylnaphthalinsulfonsäure sein, oder Schwefelsäure, Essigsäure, Trifluoressigsäure, oder Dibutylphosphat eingesetzt werden. Als Basen können vorzugsweise N-substituierte Amidine, wie 1,5-Diazabicyclo[4.3.0]non-5-en (DBN) und 1,5-Diazabicyclo[5.4.0]undec-7-en (DBU) eingesetzt werden. Als katalytisch wirkende Metallsalze und -chelate können vorzugsweise Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutyl-zinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat sowie Tetraisopropyltitanat, Tetrabutyltitanat, Titan(IV)acetylacetonat, Aluminium-tri-sec-butylat, Aluminiumacetylacetonat, Aluminiumtriflat oder Zinntriflat oder beliebige Gemische solcher Katalysatoren verwendet werden. Besonders bevorzugt ist die Verwendung von Dibutylzinn(IV)-dilaurat.

Die folgenden Abbildungen zeigen beispielhaft erfindungsgemäße Polyadditionsverbindungen A:

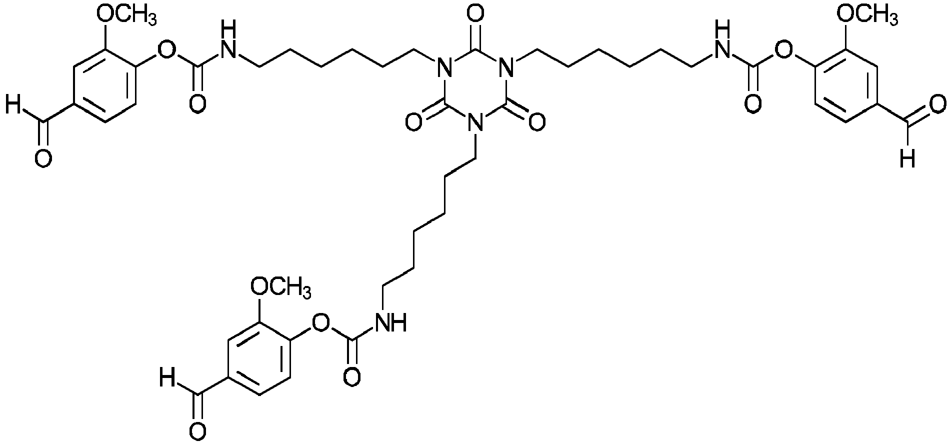

Die erfindungsgemäßen vernetzbaren Zusammensetzungen Z1 enthalten neben der mindestens einen Polyadditionsverbindung A auch mindestens ein Harnstoffderivat B, sowie gegebenenfalls Hilfs- und/oder Zusatzstoffe C.

Im Rahmen der vorliegenden Erfindung umfasst der Begriff Harnstoffderivat die Verbindung Harnstoff selbst, als auch deren Abkömmlinge (Formel II).

Zu den Hilfs- und/oder Zusatzstoffen C gehören Katalysatoren zur Beschleunigung der Aushärtung. Geeignete Katalysatoren sind Metallsalze und -chelate, Salze von Übergangsmetallen oder Halbmetallen, Säuren oder Basen. Als Säuren können vorzugsweise aromatische Sulfonsäuren, wie Dodecylbenzolsulfonsäure, para-Toluolsulfonsäure, Trifluormethan-sulfonsäure und Dinonylnaphthalinsulfonsäure sein, oder Schwefelsäure, Essigsäure, Trifluoressigsäure, oder Dibutylphosphat eingesetzt werden. Als Basen können vorzugsweise N-substituierte Amidine, wie 1,5-Diazabicyclo[4.3.0]non-5-en (DBN) und 1,5-Diazabicyclo[5.4.0]undec-7-en (DBU) eingesetzt werden. Als katalytisch wirkende Metallsalze und -chelate können vorzugsweise Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutyl-zinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat sowie Tetraisopropyltitanat, Tetrabutyltitanat, Titan(IV)acetylacetonat, Aluminium-tri-sec-butylat, Aluminiumacetylacetonat, Aluminiumtriflat oder Zinntriflat oder beliebige Gemische solcher Katalysatoren verwendet werden. Besonders bevorzugt werden Zinnchlorid und Essigsäure.

Weitere Hilfs- und/oder Zusatzstoffe C sind Lösemittel wie beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Dimethylsulfoxid, Kohlensäureester, wie Acetessigester, Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel.

Die Aushärtung der erfindungsgemäßen vernetzbaren Zusammensetzungen erfolgt bei Temperaturen von 100 bis 220 °C, vorzugsweise bei 120 bis 200 °C, besonders bevorzugt bei 120 bis 160 °C.

Zuvor werden die Polyadditionsverbindungen A mit der Komponente B und den Hilfs- und/oder Zusatzstoffen C gemischt. Das Verhältnis der Äquivalentgewichte der Komponente A und der Komponente B beträgt dabei 5:1 bis 1:5, bevorzugt 3:1 bis 1:3, besonders bevorzugt 1:1.

Die Vernetzung (Härtung) der Zusammensetzungen Z1 erfolgt im Wesentlichen durch Reaktion der Aldehydgruppen der Polyadditionsverbindungen A mit den Amingruppen der Harnstoffkomponente B. Dabei bilden primäre Amingruppen mit den Aldehydgruppen Imine bzw. bei Aminüberschuss Aminale und sekundäe Amingruppen Halbaminale bzw. bei Aminüberschuss ebenfalls Aminale. Daneben können zusätzliche Vernetzungsmechanismen vorliegen. So können den vernetzbaren Zusammensetzungen beispielsweise Polyisocyanate als weitere Vernetzer zugegeben werden.

Weitere Gegenstände der vorliegenden Erfindung sind eine vernetzte Zusammensetzung Z1', erhältlich durch Vernetzung (Härtung) einer vernetzbaren Zusammensetzungen Z1, Beschichtungsmittel, Kleb- und Dichtstoffe, umfassend eine vernetzbare Zusammensetzung Z1, Beschichtungen, Klebungen und Dichtungen, umfassend die vernetzten Zusammensetzungen Z1', sowie ein Gegenstand, umfassend mindestens ein Substrat und eine vernetzbare Zusammensetzung Z1 und ein Gegenstand, umfassend mindestens ein Substrat und die vernetzte Zusammensetzung Z1'.

Das Substrat ist vorzugsweise ausgewählt aus der Gruppe bestehend aus Metall, Holz, Holzwerkstoffen, Glas, Stein, keramischen Materialien, mineralischen Baustoffen, harten und flexiblen Kunststoffen, Textilien, Leder und Papier.

Eine bevorzugte Verwendung ist die Verwendung zur Herstellung von Beschichtungsmitteln, insbesondere solchen, die dem Korrosionsschutz dienen, bzw. von Beschichtungen, insbesondere Korrosionschutzbeschichtungen.

Ein weiterer Gegenstand der vorliegenden Erfindung sind vernetzbare Zusammensetzungen Z2, enthaltend oder bestehend aus
D) mindestens eine/r Polyadditionsverbindung, welche mindestens ein Strukturelement der allgemeinen Formel IV 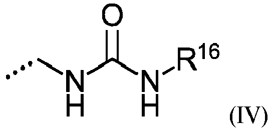 aufweist, wobei
   - R¹⁶: für Wasserstoff, einen Methyl- oder Ethylrest, bevorzugt für Wasserstoff oder einen Methylrest, besonders bevorzugt für Wasserstoff steht,
   und welche erhältlich ist aus einer Zusammensetzung, enthaltend oder bestehend aus
   D1) mindestens eine/r Verbindung der allgemeinen Formel V

      **H₂N-R¹⁶** **(V),**

      wobei R¹⁶ die oben genannte Bedeutung hat,
   D2) eine/r Isocyanatkomponente,
      und
   D3) gegebenenfalls mindestens ein/einem Hydrophilierungsmittel,
E)
   i) mindestens ein/einem Aldehyd der allgemeinen Formel VI 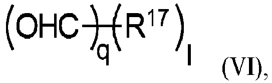 wobei
      - R¹⁷: für einen gesättigter oder ungesättigten, linearen oder verzweigten aliphatischen, einen gegebenenfalls substituierten aromatischen, heterocyclischen, cycloaliphatischen oder araliphatischen Rest mit bis zu 18 Kohlenstoffatomen ist, der bis zu 5 Heteroatome aus der Reihe Sauerstoff, Schwefel oder Stickstoff enthalten kann, steht,
      - q: für eine ganze Zahl ≥ 2, bevorzugt für 2 bis 4, besonders bevorzugt für 2 steht und
      - 1: für 0 oder 1 steht,
      und/oder
   ii) mindestens eine/r Polyadditionsverbindung A,
F) gegebenenfalls Hilfs- und/oder Zusatzstoffe/n.

### Polyadditionsverbindung D

Als Isocyanatkomponente D2 und als gegebenenfalls einzusetzende Hydrophilierungsmittel D3 kommen die selben Verbindungen in Betracht und gelten die selben Vorzugsbereiche, wie oben bezüglich der Polyadditionsverbindungen A beschrieben. An dieser Stelle sei auf diese Ausführungen verwiesen.

Die Herstellung der erfindungsgemäßen Polyadditionsverbindungen D erfolgt in einem Verhältnis der NCO-Gruppen der Komponente D2 zu den NCO-reaktiven Gruppen der Komponente D1 und gegebenenfalls D3 von 0,9 bis 1,1, bevorzugt von 1:1. Das Verhältnis von D1 zu D3 beträgt dabei 3:0 bis 0:3, bevorzugt 2:1 bis 1:2, besonders bevorzugt 2:1.

Die Umsetzung der NCO-Gruppen und NCO-reaktiven Gruppen erfolgt jeweils bei Temperaturen von 20 bis 120 °C, vorzugsweise bei 20 bis 100 °C, besonders bevorzugt bei 20 bis 90 °C. Dies gilt für die Reaktion von D1 mit D2, für die gegebenenfalls vorausgehende Reaktion mit D3.

Die Umsetzung erfolgt bevorzugt bis zu einem NCO-Gehalt der Polyadditionsverbindung D von ≤ 0,1 Gew.-%. Die Bestimmung des NCO-Gehaltes wird mittels FT-IR Spektroskopie an einem Lumos FTIR Mikroskop der Firma Bruker. Zur Bestimmung des überschüssigen NCO-Gehaltes wird die Isocyanat- Valenzschwingung zwischen 2300 und 2250 cm⁻¹ herangezogen.

Die Polyadditionsverbindungen D können lösemittelfrei, aber auch in Gegenwart von Lösemitteln hergestellt werden. Geeignete Lösemittel sind solche, die sich gegenüber den reaktiven Gruppen der Ausgangskomponenten inert zeigen. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Dimethylsulfoxid, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel. Das Lösemittel kann dabei einem oder mehreren der Reaktionspartner zugegeben werden.

Die Herstellung der Polyadditionsverbindungen D erfolgt bevorzugt ohne den Einsatz von Katalysatoren.

Die folgenden Abbildungen zeigen beispielhaft eine erfindungsgemäße Polyadditionsverbindung D:

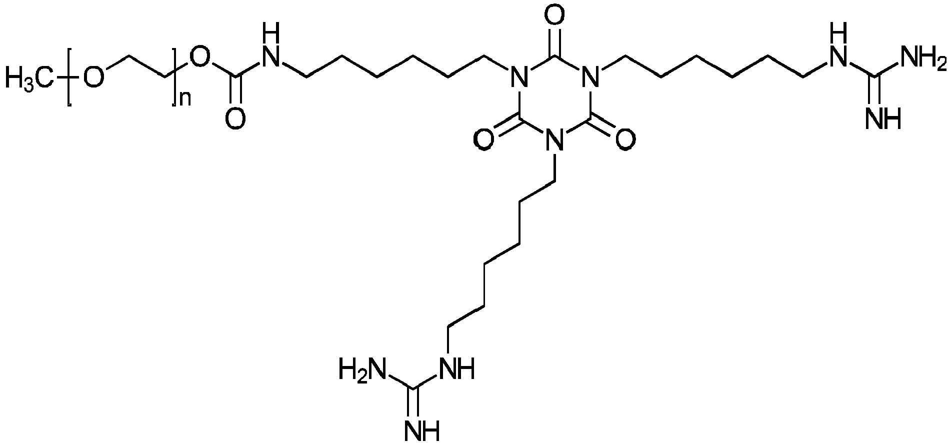

### Aldehyde E der allgemeinen Formel VI

Als Aldehyde E können beispielsweise eingesetzt werden Isophthalaldehyd, Terephthalaldehyd, Vanillin, Hydroxybenzaldehyd, Kohlensäure-1,5-Diformylfurfurylester, Glutaraldehyd, Glyoxal und Polyadditionsverbindungen A.

### Hilfs- und/oder Zusatzstoffe F

Die Beschreibung der Hilfs- und Zusatzstoffe F entspricht der Beschreibung der Komponente C.

Für die Umsetzung der Komponente D, E und F gelten die Reaktionsparameter gemäß Beschreibung zur Umsetzung der Komponenten A, B und C, sowie die dort beschriebenen Vernetzungsmechanismen analog.

Weitere Gegenstände der vorliegenden Erfindung sind eine vernetzte Zusammensetzung Z2', erhältlich durch Vernetzung (Härtung) einer vernetzbaren Zusammensetzungen Z2, Beschichtungsmittel, Kleb- und Dichtstoffe, umfassend eine vernetzbare Zusammensetzung Z2, Beschichtungen, Klebungen und Dichtungen, umfassend die vernetzten Zusammensetzungen Z2', sowie ein Gegenstand, umfassend mindestens ein Substrat und eine vernetzbare Zusammensetzung Z2 und ein Gegenstand, umfassend mindestens ein Substrat und die vernetzte Zusammensetzung Z2'.

Das Substrat ist auch hier vorzugsweise ausgewählt aus der Gruppe bestehend aus Metall, Holz, Holzwerkstoffen, Glas, Stein, keramischen Materialien, mineralischen Baustoffen, harten und flexiblen Kunststoffen, Textilien, Leder und Papier.

Eine bevorzugte Verwendung ist die Verwendung zur Herstellung von Beschichtungsmitteln, insbesondere solchen, die dem Korrosionsschutz dienen, bzw. von Beschichtungen, insbesondere Korrosionschutzbeschichtungen.

Die folgenden Beispiele dienen dazu, die Erfindung zu illustrieren. Sie sind nicht dazu gedacht, den Schutzbereich der Ansprüche in irgendeiner Weise zu beschränken.

### Experimenteller Teil

Alle Prozentangaben beziehen sich, soweit nichts Anderslautendes vermerkt, auf das Gewicht.

Die Bestimmung der NCO-Gehalte sowie die Untersuchung der Deblockierungstemperatur erfolgte mittels des Lumos FTIR Mikroskops der Firma Bruker.

### Liste der Handelsnamen und Abkürzungen

- Desmodur ultra N 3600 wurde von der Firma Covestro Deutschland AG bezogen.
- MPEG-350 wurde von der Firma Merck (Sigma Aldrich) bezogen.
- Ammoniak wurde von der Firma Merck (Sigma Aldrich) bezogen.
- 4-(Hydroxymethyl)benzaldehyd wurde von der Firma Merck (Sigma Aldrich) bezogen.
- 4-Hydroxybenzaldehyd wurde von der Firma Merck (Sigma Aldrich) bezogen.
- Vanillin wurde von der Firma Merck (Sigma Aldrich) bezogen.
- 5-Hydroxymethylfurfural wurde von der Firma Carbolution bezogen.
- Lösemittel wie Ethanol, Aceton, 1-Methoxy-2-propylacetat und Dimethylsulfoxid (wasserfrei) wurde von der Firma Merck (Sigma Aldrich) bezogen.
- Dibutylzinndilaurat (0.01%ig in Butylacetat) wurde von der Firma Merck (Sigma Aldrich) bezogen.
- Essigsäure wurde von der Firma Merck (Sigma Aldrich) bezogen.

### Beispiel 1: NH3 Trimer

Es wurde eine 12,50 g einer 2 molaren Lösung von Ammoniak in Ethanol bei Raumtemperatur vorgelegt. Anschließend wurden 2,78 g Desmodur ultra N 3600 gelöst in 11,10 g Aceton innerhalb einer Stunde unter Rühren zudosiert. Es wurden zusätzlich 26,62 g Aceton portionsweise zugegeben um eine homogene Mischung zu erhalten. Nach vollständiger Zugabe des Desmodur ultra N 3600 wurde für 30 min weiter gerührt. Das Produkt fiel als weißer Niederschlag aus, welcher anschließend abgetrennt und mehrfach mit Aceton gewaschen wurde.

### Beispiel 2: MPEG-NH₃-Trimer

Die Synthese erfolgte in zwei Stufen. In der ersten Stufe wurden 5,39 g Methoxypolyethylenglykol-350 (MPEG-350) und 8,47g Desmodur ultra N 3600 in 7,14 g 1-Methoxy-2-propylacetat bei Raumtemperatur vorgelegt, homogenisiert und unter Inertgasatmosphäre auf 85 °C erhitzt. Die Mischung wurde für 4 bis 6 Stunden bei 85 °C gerührt und der Umsatz mittels IR-Spektroskopie nachgewiesen. Das Produkt wurde separiert.

In einer zweiten Stufe wurden 36,29 g einer 2 molaren Lösung von Ammoniak in Ethanol unter Inertgasatmosphäre vorgelegt. Das Produkt der ersten Stufe wurde unter mäßigem Rühren bei Raumtemperatur binnen einer Stunde konstant zugetropft. Es wurden 13,71 g Ethanol zugegeben um die Viskosität konstant zu halten. Nach vollständiger Zugabe des Produktes der ersten Stufe wurde für 30 min weiter gerührt. Der vollständige Umsatz wurde mittels IR-Spektroskopie nachgewiesen.

### Beispiel 3: Hydroxybenzaldehyd-Trimer

9,97 g 4-Hydroxybenzaldehyd und die entsprechende Menge des Lösemittel zur Herstellung eines 50 Gew.-%igen Produktes wurden bei Raumtemperatur vorgelegt und das 4-Hydroxybenzaldehyd unter Rühren gelöst. Anschließend wurden 14,91 g Desmodur ultra N 3600 hinzugegeben und die Mischung unter Rühren homogenisiert. Es wurden 0,25 g Dibutylzinndilaurat-Lösung (0,01%ig in Butylacetat) zugeben und die Mischung unter stetigem Rühren auf 70°C erwärmt. Das Reaktionsgemisch wurde bei 70 °C gerührt bis der theoretische NCO Gehalt von 0,0 Gew.-% erreicht war.

### Beispiel 4: HMF-Trimer

10,16 g 5-Hydroxymethylfurfural und die entsprechende Menge des Lösemittel zur Herstellung eines 50 Gew.-%igen Produktes wurden bei Raumtemperatur vorgelegt und das 5-Hydroxymethylfurfural unter Rühren gelöst. Anschließend wurden 14,75 g Desmodur ultra N 3600 hinzugegeben und die Mischung unter Rühren homogenisiert. Es wurden 0,25 g Dibutylzinndilaurat-Lösung (0,01%ig in Butylacetat) zugeben und die Mischung unter stetigem Rühren auf 70°C erwärmt. Das Reaktionsgemisch wurde bei 70 °C gerührt bis der theoretische NCO Gehalt von 0,0 Gew.-% erreicht war.

### Beispiel 5: Vanillin-Trimer

11,31 g Vanillin und die entsprechende Menge des Lösemittel zur Herstellung eines 50 Gew.-%igen Produktes wurden bei Raumtemperatur vorgelegt und das 5-Hydroxymethylfurfural unter Rühren gelöst. Anschließend wurden 13,57 g Desmodur ultra N 3600 hinzugegeben und die Mischung unter Rühren homogenisiert. Es wurden 0,25 g Dibutylzinndilaurat-Lösung (0,01%ig in Butylacetat) zugeben und die Mischung unter stetigem Rühren auf 70°C erwärmt. Das Reaktionsgemisch wurde bei 70 °C gerührt bis der theoretische NCO Gehalt von 0,0 Gew.-% erreicht war.

### Anwendungsbeispiele - Untersuchung der Vernetzung

Zur Untersuchung der Vernetzung wurden Verhältnisse der Polyadditionsverbindungen A bzw. D zu Harnstoffderivat B bzw. Aldhehydderivat E bezogen auf die funktionellen Gruppen von 1:1 bis 1:5 gewählt. Die Formulierungen werden als 50 Gew.-%ige Lösungen in Lösemittelgemischen aus MPA, DMSO sowie Ethanol hergestellt. Als Einbrennbedingungen werden 30 Minuten bei 120 bis 160 °C gewählt. Die Härte des Filmes wurde subjektiv beurteilt, indem der Film mit einer Nadel bearbeitet wurde. Die Beurteilung der Härte erfolgt anhand der Kratzspuren.

| **Polyadditionsverbindung D** | **Aldehyd E** | **Verhältnis D:E bezogen auf funktionelle Gruppen** | **Bewertung Film** |
|---|---|---|---|
| MPEG-NH3 Trimer | Glyoxal | 1:5 | Mittelharter Film |
| MPEG-NH3 Trimer | Glutaraldehyd | 1:3 | Mittelharter Film |
| MPEG-NH3 Trimer | Isophthalaldeyd | 1:3 | Mittelharter Film |
| MPEG-NH3 Trimer | Terephthalaldehyd | 1:3 | Mittelharter Film |
| MPEG-NH3 Trimer | Vanillin-Trimer | 1:3 | Harter Film |
| MPEG-NH3 Trimer | HMF-Trimer | 1:3 | Mittelharter Film |
| MPEG-NH3 Trimer | Kohlensäure-1,5-diformylfurfurylester | 1:3 | Mittelharter Film |
| MPEG-NH3 Trimer | Hexandion | 1:1 bis 1:5 | Klebrige Filme |
| MPEG-NH3 Trimer | Acetylaceton | 1:1 bis 1:5 | Klebrige Filme |

| **Polyadditionsverbindung A** | **Harnstoffderivat B** | **Verhältnis A:B bezogen auf funktionelle Gruppen** | **Bewertung Film** |
|---|---|---|---|
| Vanillin-Trimer | Urea | 1:1 bis 1:1,5 | Sehr harter Film |
| Hydroxybenzaldehyd | Urea | 1:1 | Harter Film |
| Hydroxymethylfurfural | Urea | 1:1 | Harter Film |

## Patentansprüche

1. Vernetzbare Zusammensetzungen Z1, enthaltend oder bestehend aus
A) mindestens eine/r Polyadditionsverbindung, welche mindestens ein Strukturelement der allgemeinen Formel I 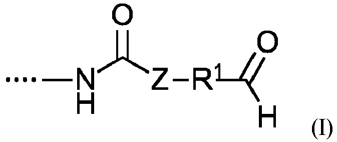 aufweist, wobei
R¹ ein gesättigter oder ungesättigter, linearer oder verzweigter aliphatischer, ein gegebenenfalls substituierter aromatischer, heterocyclischer, cycloaliphatischer oder araliphatischer Rest mit bis zu 18 Kohlenstoffatomen ist, der bis zu drei Heteroatome aus der Reihe Sauerstoff, Schwefel oder Stickstoff enthalten kann,
und
Z für O, S oder N(H) steht, bevorzugt für O steht,
B) mindestens ein/einem Harnstoffderivat der allgemeinen Formel II 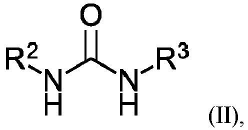 wobei
R² für Wasserstoff, einen Methyl- oder Ethylrest steht, und
R³ für Wasserstoff, einen Methyl- oder Ethylrest oder für den Rest 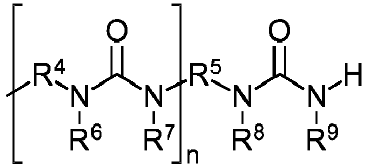 steht, wobei
n für eine ganze Zahl ≥ 0, bevorzugt für 0 bis 5, besonders bevorzugt für 0 steht,
R⁴ und R⁵ unabhängig voneinander für einen linearen oder verzweigten aliphatischen Rest mit bis zu 5 Kohlenstoffen stehen, bevorzugt für Methylen- und Ethylen-Reste stehen,
R⁶ bis R⁹ unabhängig voneinander für Wasserstoff, einen Methyl- oder Ethylrest stehen,
C) gegebenenfalls Hilfs- und/oder Zusatzstoffe/n.

2. Vernetzbare Zusammensetzungen Z1 gemäß Anspruch 1, wobei die mindestens eine Polyadditionsverbindung A erhältlich ist aus einer Zusammensetzung, enthaltend oder bestehend aus
A1) mindestens ein/einem Aldehyd der allgemeinen Formel III 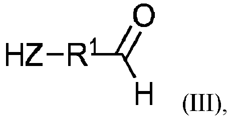 wobei Z und R1 die in Anspruch 1 genannte Bedeutung haben,
A2) eine/r Isocyanatkomponente,
und
A3) gegebenenfalls mindestens ein/einem Hydrophilierungsmittel.

3. Polyadditionsverbindungen A, die mindestens ein Strukturelement der allgemeinen Formel I 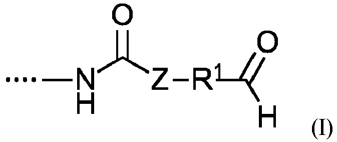 aufweisen, wobei Z und R1 die in Anspruch 1 genannte Bedeutung haben und die erhältlich sind aus einer Zusammensetzung, enthaltend oder bestehend aus
A1) mindestens ein/einem Aldehyd der allgemeinen Formel III 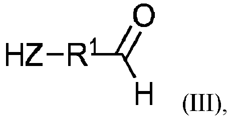 wobei Z und R1 die in Anspruch 1 genannte Bedeutung haben,
A2) eine/r Isocyanatkomponente,
und
A3) gegebenenfalls mindestens ein/einem Hydrophilierungsmittel.

4. Verfahren zur Herstellung der Polyadditionsverbindungen A gemäß Anspruch 3, umfassend die oder bestehend aus der Umsetzung der Komponenten A1, A2 und gegebenenfalls A3 gemäß Anspruch 3.

5. Vernetzbare Zusammensetzungen Z1 gemäß Anspruch 2, bzw. Polyadditionsverbindungen A gemäß Anspruch 3, bzw. Verfahren zur Herstellung der Polyadditionsverbindungen A gemäß Anspruch 4, wobei Komponente A2 ausgewählt ist aus der Gruppe bestehend aus monomeren Diisocyanaten mit aliphatisch, cycloaliphatisch, araliphatisch und/oder aromatisch gebundenen Isocyanatgruppen und durch Modifizierung von monomeren aliphatischen, cycloaliphatischen, araliphatischen und/oder aromatischen Diisocyanaten erhältlichen oligomeren Di- oder Polyisocyanaten mit Uretdion-, Isocyanurat-, Allophanat-, Harnstoff-, Biuret-, Iminooxadiazindion- und/oder Oxadiazintrionstruktur.

6. Vernetzbare Zusammensetzungen Z1 gemäß Anspruch 2 oder 5, bzw. Polyadditionsverbindungen A gemäß Anspruch 3 oder 5, bzw. Verfahren zur Herstellung der Polyadditionsverbindungen A gemäß Anspruch 4 oder 5, wobei das Verhältnis der NCO-Gruppen der Komponente A2 zu den NCO-reaktiven Gruppen der Komponente A1 und gegebenenfalls A3 von 0,9 bis 1,1, bevorzugt 1:1 beträgt.

7. Vernetzbare Zusammensetzungen Z1 gemäß einem der Ansprüche 1, 2, 5 oder 6, wobei das Verhältnis der Äquivalentgewichte der Komponente A und der Komponente B 5:1 bis 1:5, bevorzugt 3:1 bis 1:3, besonders bevorzugt 1:1 beträgt.

8. Beschichtungsmittel, Kleb- und Dichtstoffe, umfassend eine vernetzbare Zusammensetzung Z1 gemäß einem der Ansprüche 1, 2, 5, 6 oder 7.

9. Verfahren zur Herstellung einer vernetzen Zusammensetzung Z1', wobei eine vernetzbare Zusammensetzungen Z1 gemäß einem der Ansprüche 1, 2, 5, 6 oder 7 bei Temperaturen von 100 bis 220 °C, vorzugsweise bei 120 bis 200 °C, besonders bevorzugt bei 120 bis 160 °C zur Reaktion gebracht wird.

10. Beschichtungen, Klebungen und Dichtungen, umfassend eine vernetzte Zusammensetzungen Z1' erhältlich gemäß Anspruch 9, sowie Substrate, umfassend eine vernetzte Zusammensetzung Z1' erhältlich gemäß Anspruch 9.

11. Vernetzbare Zusammensetzungen Z2, enthaltend oder bestehend aus
D) mindestens eine/r Polyadditionsverbindung, welche mindestens ein Strukturelement der allgemeinen Formel IV 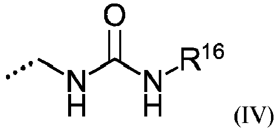 aufweist, wobei
R¹⁶ für Wasserstoff, einen Methyl- oder Ethylrest, bevorzugt für Wasserstoff oder einen Methylrest, besonders bevorzugt für Wasserstoff steht,
und welche erhältlich ist aus einer Zusammensetzung, enthaltend oder bestehend aus
D1) mindestens eine/r Verbindung der allgemeinen Formel V
**H₂N-R¹⁶** **(V)**
, wobei R¹⁶ die oben genannte Bedeutung hat,
D2) eine/r Isocyanatkomponente,
und
D3) gegebenenfalls mindestens ein/einem Hydrophilierungsmittel,
E)
i) mindestens ein/einem Aldehyd der allgemeinen Formel VI 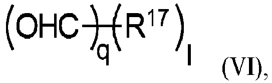 wobei
R¹⁷ für einen gesättigter oder ungesättigten, linearen oder verzweigten aliphatischen, einen gegebenenfalls substituierten aromatischen, heterocyclischen, cycloaliphatischen oder araliphatischen Rest mit bis zu 18 Kohlenstoffatomen ist, der bis zu 5 Heteroatome aus der Reihe Sauerstoff, Schwefel oder Stickstoff enthalten kann, steht,
q für eine ganze Zahl ≥ 2, bevorzugt für 2 bis 4, besonders bevorzugt für 2 steht und
1 für 0 oder 1 steht,
und/oder
ii) mindestens eine/r Polyadditionsverbindung A,
F) gegebenenfalls Hilfs- und/oder Zusatzstoffe/n.

12. Vernetzbare Zusammensetzungen Z2 gemäß Anspruch 11, wobei Komponente D2 ausgewählt ist aus der Gruppe bestehend aus monomeren Diisocyanaten mit aliphatisch, cycloaliphatisch, araliphatisch und/oder aromatisch gebundenen Isocyanatgruppen und durch Modifizierung von monomeren aliphatischen, cycloaliphatischen, araliphatischen und/oder aromatischen Diisocyanaten erhältlichen oligomeren Di- oder Polyisocyanaten mit Uretdion-, Isocyanurat-, Allophanat-, Harnstoff-, Biuret-, Iminooxadiazindion- und/oder Oxadiazintrionstruktur.

13. Vernetzbare Zusammensetzungen Z2 gemäß Anspruch 11 oder 12, wobei das Verhältnis der NCO-Gruppen der Komponente D2 zu den NCO-reaktiven Gruppen der Komponente D1 und gegebenenfalls D3 von 0,9 bis 1,1, bevorzugt 1:1 beträgt.

14. Vernetzbare Zusammensetzungen Z2 gemäß einem der Ansprüche 11 bis 13, wobei das Verhältnis der Äquivalentgewichte der Komponente D und der Komponente E 5:1 bis 1:5, bevorzugt 3:1 bis 1:3, besonders bevorzugt 1:1 beträgt.

15. Beschichtungsmittel, Kleb- und Dichtstoffe, umfassend eine vernetzbare Zusammensetzung Z2 gemäß einem der Ansprüche 11 bis 14.

16. Verfahren zur Herstellung einer vernetzen Zusammensetzung Z2', wobei eine vernetzbare Zusammensetzungen Z2 gemäß einem der Ansprüche 11 bis 14 bei Temperaturen von 100 bis 220 °C, vorzugsweise bei 120 bis 200 °C, besonders bevorzugt bei 120 bis 160 °C zur Reaktion gebracht wird.

17. Beschichtungen, Klebungen und Dichtungen, umfassend eine vernetzte Zusammensetzungen Z2' erhältlich gemäß Anspruch 14, sowie Substrate, umfassend eine vernetzte Zusammensetzung Z2' erhältlich gemäß Anspruch 14.
